# EUROPEAN PATENT SPECIFICATION

(11) **EP 2 051 444 B1**
(45) Date of publication and mention of the grant of the patent: **11.12.2013**
(21) Application number: 08253326.6
(22) Date of filing: 13.10.2008
(51) Int. Cl.: H04L 12/24

(54) **System and method for performing a network simulation procedure**
System und Verfahren zur Durchführung eines Netzwerksimulationsverfahrens
Système et procédé pour la réalisation d'une procédure de simulation de réseau

(30) Priority: 16.10.2007 US 974715
(43) Date of publication of application: 22.04.2009
(73) Proprietor: Sony Corporation, Tokyo 108-0075 (JP); Sony Electronics Inc., Park Ridge, NJ 07656 (US)
(72) Inventor: Georgis, Nikolaos, San Diego, CA 92128 (US); Hwang, Paul, Burbank, CA 91501 (US); Nguyen, Djung, San Diego, CA 92130 (US)
(74) Representative: McGowan, Cathrine

(56) References cited:
- XINJIE CHANG: "NETWORK SIMULATIONS WITH OPNET" PROCEEDINGS OF THE 31ST CONFERENCE ON WINTER SIMULATION: SIMULATION---A BRIDGE TO THE FUTURE - VOLUME 1 TABLE OF CONTENTS, 1999, pages 307-314, XP002512218 Phoenix, Arizona, United States

## Description

### Field of the Invention

This invention relates to a system and method for performing a network simulation procedure. Embodiments of the present invention relate generally to techniques for managing electronic information, and relates more particularly to a system and method for effectively performing a network simulation procedure.

### Background of the Invention

Implementing effective methods for managing electronic information is a significant consideration for designers and manufacturers of contemporary electronic devices. However, effectively managing information utilized by devices in an electronic network may create substantial challenges for system designers. For example, enhanced demands for increased device functionality and performance may require more system processing power and require additional software resources. An increase in processing or software requirements may also result in a corresponding detrimental economic impact due to increased production costs and operational inefficiencies.

Furthermore, enhanced device capability to perform various advanced data management operations may provide additional benefits to a system user, but may also place increased demands on the control and management of various system components. For example, an enhanced electronic network device that effectively manages electronic content information may benefit from an effective implementation because of the large amount and complexity of the digital data involved.

Due to growing demands on system resources and substantially increasing data magnitudes, it is apparent that developing new techniques for managing information in electronic networks is a matter of concern for related electronic technologies. Therefore, for all the foregoing reasons, developing effective techniques for managing information in electronic networks remains a significant consideration for designers, manufacturers, and users of contemporary electronic devices.

Xinjie Chang in "Network simulations with OPNET" (Proceedings of the 1999 Winter Simulation Conference, pages 307-314) compares several computer network simulators, and describes in detail OPNET (Optimized Network Engineering Tool), a powerful software simulation package. Implementation details of OPNET are given and some simulation examples illustrated. OPNET provides a comprehensive development environment for the specification, simulation and performance analysis of communication networks, and supports a large range of communication systems. Discrete event simulations are used as the means of analyzing system performance.

### Summary of the Invention

Various respective aspects and features of the invention are defined in the appended claims.

Accordingly, a first aspect of the invention is directed to a system for performing a network simulation procedure for an electronic network as recited in Claim 1.

A second aspect of the invention is directed to a method for performing a network simulation procedure for an electronic network as recited in Claim 17.

In accordance with embodiments of the present invention, a system and method for effectively performing a network simulation procedure are disclosed. In one embodiment, a simulation manager of a tracking server initializes a network connectivity matrix of a simulation model to define the topology of an electronic network. In various embodiments, the network connectivity matrix may include any desired information, including, but not limited to, upload and/or download transfer speeds for client devices in the electronic network. The simulation manager may also initialize a peer availability matrix that specifies availabilities (powered and connected states) of the various client devices in the electronic network. The simulation manager may further initialize a content distribution matrix that defines the storage locations of various content items on the client devices in the electronic network.

The simulation manager may set a simulation clock to the current date and time. In alternate embodiments, the simulation clock may be set to any desired date and/or time. The simulation manager obtains recommendation lists and confidence matrices for all client devices. The simulation manager then advantageously utilizes the accumulated information from the resulting simulation model and simulation parameters to simulated content transfers and other performance attributes for the client devices of the electronic network.

The simulation manager may periodically increment the simulation clock according to a formula : *t* = *t* + Δ*t* (where "*t*" is a current time of the simulation clock and "Δ*t*" is a selectable time interval) to generate an updated clock value for the simulation clock. The simulation manager then recalculates all matrices and any other appropriate simulation parameters based upon the updated clock value of the simulation clock. The simulation manager may iteratively update the simulation clock and simulation model, and continue the network simulation procedure until certain pre-defined end criteria have been met.

The simulation manager or other appropriate entity (such as a system designer) may then analyze simulation results from the network simulation procedure. In certain embodiments, the simulation manager or other entity may also estimate and evaluate a network revenue index that is based upon the performance of electronic network during the network simulation procedure. The foregoing simulation results may include any appropriate types of information or problems, including, but not limited to, transfer bottlenecks (for example, patterns of slow transfer speeds between various client devices and/or patterns of low peer availability for particular client devices).

The simulation manager or other entity may then determine whether any specific network improvements to electronic network are suggested or required based upon the network simulation procedure. The network improvements may be suggested in appropriate manner. For example, network improvements may be triggered by observing certain pre-defined problem criteria in the simulation analysis data generated from the network simulation procedure. If network improvements are suggested, then the network improvements may be implemented in any effective manner. For example, the network improvements may be implemented automatically by the simulation manager, or the network improvements may be implemented manually by a system designer or similar entity. For at least the foregoing reasons, embodiments of the present invention therefore provide an improved system and method for effectively performing a network simulation procedure.

### Brief Description of the Drawings

Embodiments of the invention will now be described with reference to the accompanying drawings, throughout which like parts are referred to by like references, and in which:
FIG. 1A is a block diagram of an electronic network, in accordance with one embodiment of the present invention;
FIG. 1B is a block diagram of the peer-to-peer network of FIG. 1A, in accordance with one embodiment of the present invention;
FIG. 2 is a block diagram for the tracking server of FIG. 1, in accordance with one embodiment of the present invention;
FIG. 3 is a block diagram for the server memory of FIG. 2, in accordance with one embodiment of the present invention;
FIG. 4A is a diagram for the recommendation engine of FIG. 3, in accordance with one embodiment of the present invention;
FIG. 4B is a diagram for the recommendation lists of FIG. 4A, in accordance with one embodiment of the present invention;
FIG. 5 is a block diagram for a client device from FIG. 1A, in accordance with one embodiment of the present invention;
FIG. 6 is a block diagram for the device memory of FIG. 5, in accordance with one embodiment of the present invention;
FIG. 7 is a diagram illustrating a segmented content preloading procedure, in accordance with one embodiment of the present invention;
FIG. 8 is a block diagram for the simulation model of FIG. 3, in accordance with one embodiment of the present invention;
FIG. 9 is a block diagram for the simulation parameters of FIG. 8, in accordance with one embodiment of the present invention;
FIG. 10 is a flowchart of method steps for optimizing an electronic network, in accordance with one embodiment of the present invention; and
FIG. 11 is a flowchart of method steps for performing a network simulation procedure, in accordance with one embodiment of the present invention

### Description of the Example Embodiments

Embodiments of the present invention relate to an improvement in electronic information management techniques. The following description is presented to enable one of ordinary skill in the art to make and use the invention, and is provided in the context of a patent application and its requirements. Various modifications to the disclosed embodiments will be readily apparent to those skilled in the art, and the generic principles herein may be applied to other embodiments. Therefore, the present invention is not intended to be limited to the embodiments shown, but is to be accorded a scope consistent with the claims.

Embodiment of the present invention comprise a system and method for effectively performing a network simulation procedure for an electronic network, and includes a group of client devices that are configured to locally store content items in a distributed manner. Certain of the client devices periodically access required content items directly from other client devices. A simulation model on a tracking server is provided to accurately represent the various client devices and their corresponding transfer links in the electronic network. A simulation manager of the tracking server compiles various types of simulation parameters corresponding to the electronic network. The simulation manager then utilizes the simulation model and the simulation parameters for performing the network simulation procedure to effectively identify and correct various types of network performance problems.

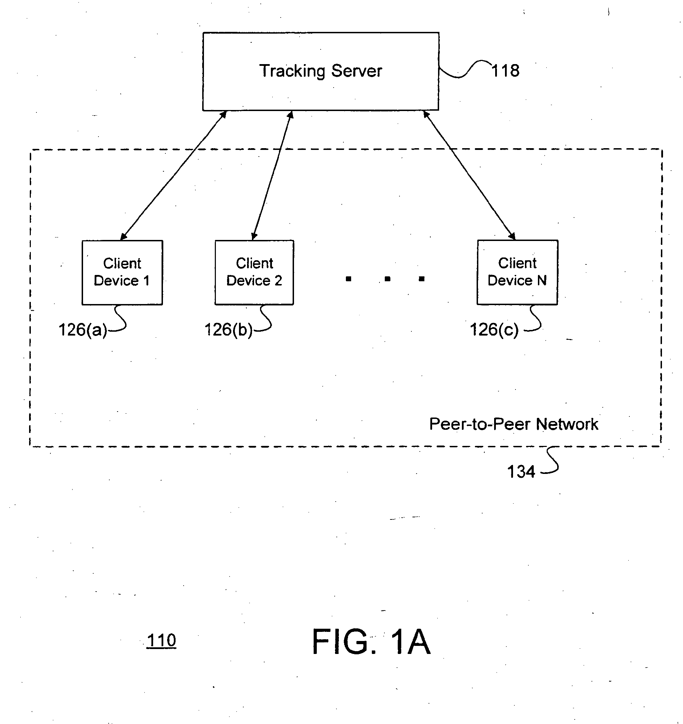

Referring now to FIG. 1A, a block diagram of an electronic network 110 is shown, in accordance with one embodiment of the present invention. In the FIG. 1A embodiment, electronic network 110 may include, but is not limited to, a tracking server 118, and a plurality of client devices 126. In alternate embodiments, electronic network 110 may be implemented by utilizing components and configurations in addition to, or instead of, certain of those components and configurations discussed in conjunction with the FIG. 1A embodiment.

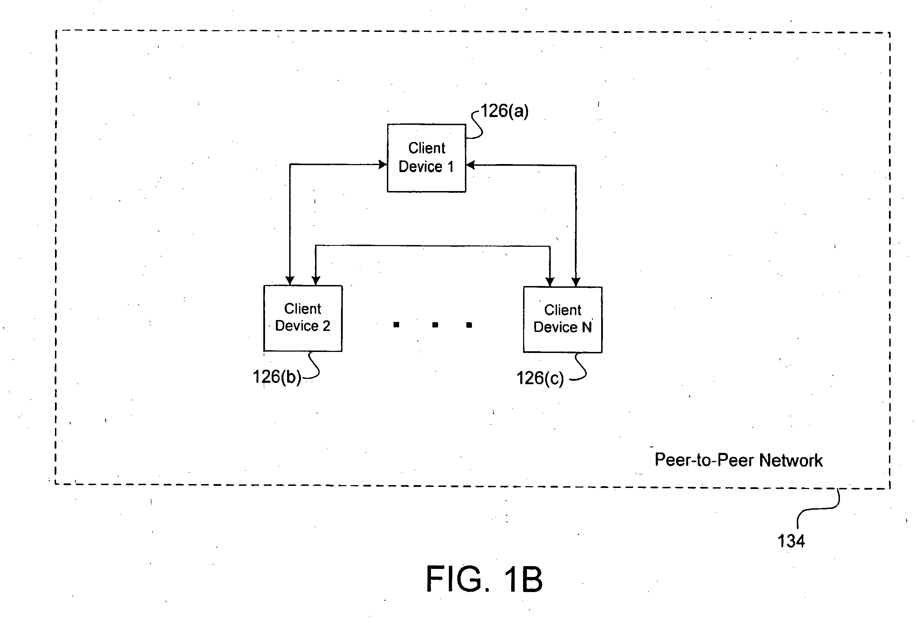

In accordance with an embodiment of the present invention, any desired number of client devices 126 may be configured in a peer-to-peer network 134 that is further discussed below in conjunction with FIG. 1B. In the FIG. 1A embodiment, client devices 126 may include an electronic device 1 (126(a)) through an electronic device N 126(c). In the FIG. 1A embodiment, each of the client devices 126 may bi-directionally communicate directly with other ones of the client devices 126 by utilizing any appropriate peer-to-peer communication techniques or other effective communication methods.

In accordance with an embodiment of the present invention, some or all of the client devices 126 may be advantageously preloaded with various pre-determined content items. The content items may include any desired types of electronic information. For example, content items may include, but are not limited to, entertainment programming, movies, video data, audio data, digital photographs, still image data, graphics, web pages, program guide information, and various types of software programs, etc.

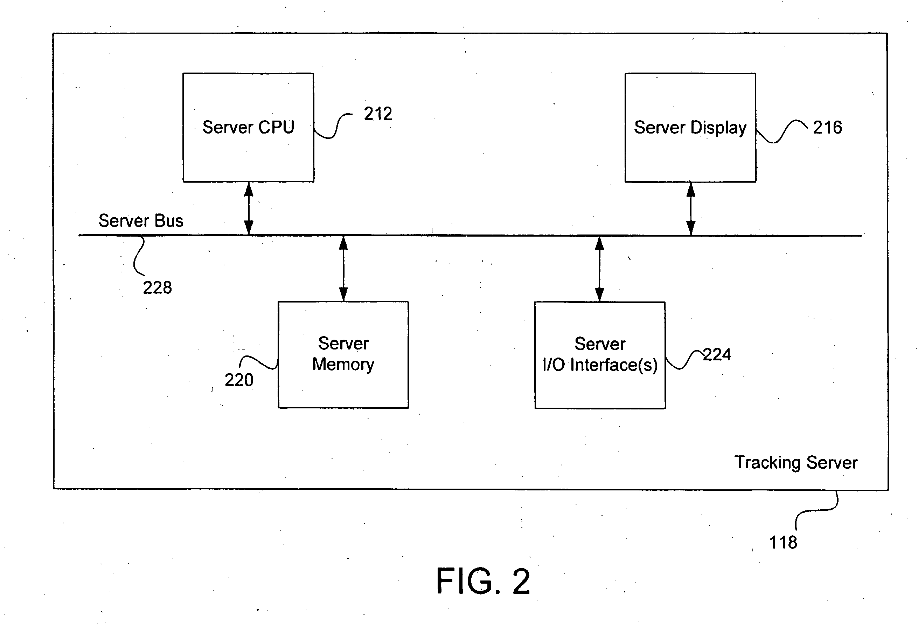

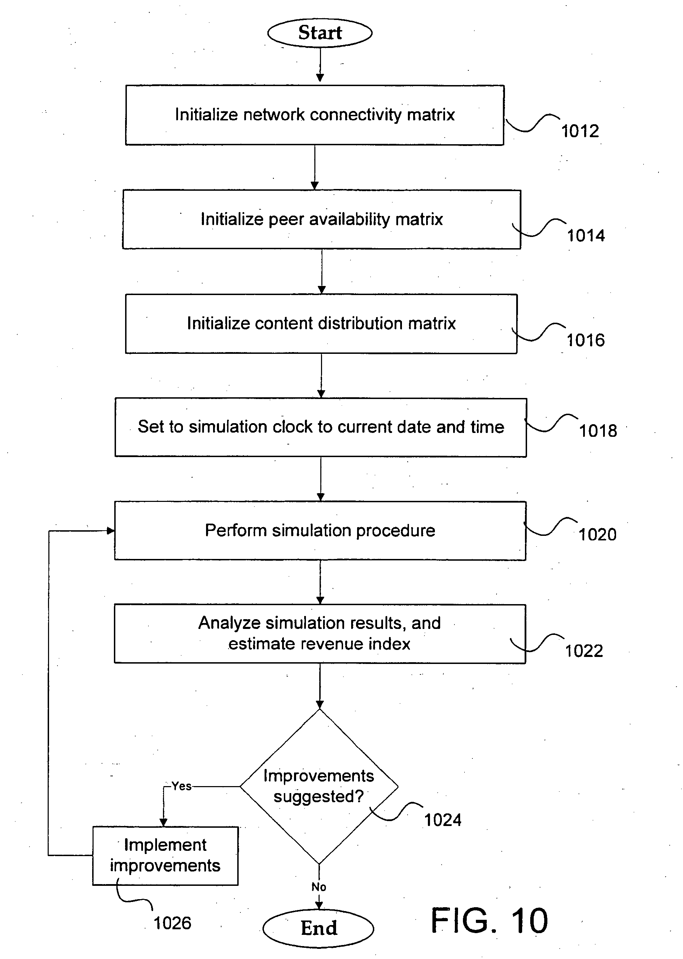

System users may thus perform appropriate content download procedures through peer-to-peer network 134 to obtain and utilize desired content items. In certain embodiments, certain elements of electronic network 110 may be supported by a network entity that receives financial payment from users of the client devices 126 in return for downloading and utilizing content items. In the FIG. 1A embodiment, tracking server 118 may be implemented in any effective manner to track the current locations of the various content items. One implementation for tracking server 118 is further discussed below in conjunction with FIGS. 2-3. In accordance with an embodiment of the present invention, a simulation manager of tracking server 118 (or other appropriate entity) may perform a network simulation procedure to identify or predict certain network characteristics, problems, or attributes. Additional details regarding performing the foregoing network simulation procedure are further discussed below in conjunction with FIGS. 10-11.

Referring now to FIG. 1B, a block diagram of the FIG. 1A peer-to-peer network 134 is shown, in accordance with one embodiment of the present invention. The FIG. 1B embodiment includes a client device 1 (126(a)), a client device 2 (126(b)), through a client device N (126(a)). In alternate embodiments, peer-to-peer network 134 may be implemented by utilizing components and configurations in addition to, or instead of, certain of those components and configurations discussed in conjunction with the FIG. 1B embodiment. Furthermore, peer-to-peer network 134 may be implemented to include any desired number of client devices 126.

In the FIG. 1B embodiment, each of the client devices 126 may bi-directionally communicate directly with any other of the client devices 126 by utilizing any desired peer-to-peer communication techniques or other effective communication methods. For example, client device 1 (126(a)) may bi-directionally communicate directly with either client device 2 (126(b)) or client device N (126(c)). Similarly, client device 2 (126(b) may bi-directionally communicate directly with client device N (126(c)). Furthermore, in the FIG. 1B embodiment, any of the client devices 126 in peer-to-peer network 134 may perform a peer-to-peer content transfer procedure to download content segments from any of the other client devices 126 in peer-to-peer network 134. Additional details regarding the simulation of the FIG. 1B peer-to-peer network 134 are further discussed below in conjunction with FIGS. 10-11.

Referring now to FIG. 2, a block diagram for one embodiment of the FIG. 1A tracking server 118 is shown, in accordance with an embodiment of the present invention. In the FIG. 2 embodiment, tracking server 118 includes, but is not limited to, a server central processing unit (server CPU) 212, a server display 216, a server memory 220, and one or more server input/output interface(s) (server I/O interface(s)) 224. The foregoing components of tracking server 118 may be coupled to, and communicate through, a server bus 228. In alternate embodiments, tracking server 118 may alternately be implemented using components and configurations in addition to, or instead of, certain of those components and configurations discussed in conjunction with the FIG. 2 embodiment.

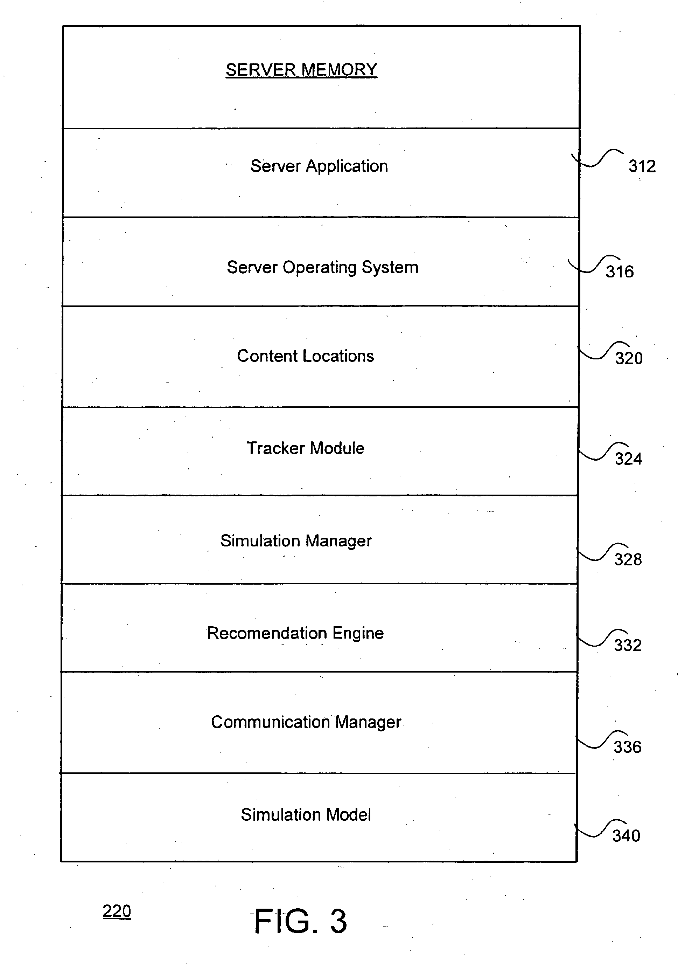

In the FIG. 2 embodiment, server CPU 212 may be implemented to include any appropriate and compatible microprocessor device that preferably executes software instructions to thereby control and manage the operation of tracking server 118. The FIG. 2 server display 216 may include any effective type of display technology including a cathode-ray-tube monitor or a liquid-crystal display device with an appropriate screen for displaying various information to a server user. In the FIG. 2 embodiment, server memory 220 may be implemented to include any combination of desired storage devices, including, but not limited to, read-only memory (ROM), random-access memory (RAM), and various types of non-volatile memory, such as floppy disks, memory sticks, compact disks, or hard disks. The contents and functionality of server memory 220 are further discussed below in conjunction with FIG. 3.

In the FIG. 2 embodiment, server I/O interface(s) 224 may include one or more input and/or output interfaces to receive and/or transmit any required types of information by tracking server 118. Server I/O interface(s) 224 may include one or more means for allowing a server user to communicate with tracking server 118. The utilization of tracking server 118 to perform appropriate network simulation procedures is further discussed below in conjunction with FIGS. 10-11.

Referring now to FIG. 3, a block diagram for one embodiment of the FIG. 2 server memory 220 is shown, in accordance with an embodiment of the present invention. In the FIG. 3 embodiment, server memory 220 may include, but is not limited to, a server application 312, a server operating system 316, content locations 320, a tracker module 324, a simulation manager 328, a recommendation engine 332, a communication manager 336, and a simulation model 340. In alternate embodiments, server memory 220 may include various other components and functionalities in addition to, or instead of, certain those components and functionalities discussed in conjunction with the FIG. 3 embodiment.

In the FIG. 3 embodiment, server application 312 may include program instructions that are preferably executed by server CPU 212 (FIG. 2) to perform various functions and operations for tracking server 118. The particular nature and functionality of server application 312 typically varies depending upon factors such as the specific type and particular functionality of the corresponding tracking server 118. Server operating system 316 may perform various low-level functions for tracking server 118.

In the FIG. 3 embodiment, content locations 320 may include any appropriate type of tracking information to specify or track the current locations of individual content items on the various client devices 126. These content items may be individually preloaded onto different ones of the client devices 126 (FIG. 1A). Content locations 320 may include, but is not limited to, the current storage locations of the various content items. In certain embodiments, content locations 320 may include unique client identifiers that represent the respective client devices 126 on which the content items are stored.

In the FIG. 3 embodiment, tracker module 324 may monitor any transfers of content items between the various client devices 126. Tracker module 324 may then dynamically update client locations 320 to incorporate any new changes in the current storage locations of the various content items on client devices 126. In the FIG. 3 embodiment, simulation manager 328 may utilize simulation model 340 to perform appropriate network simulation procedures to optimize content item downloads between various client devices 126 in peer-to-peer network 134. Additional details with respect to effectively performing the foregoing network simulation procedures are further discussed below in conjunction with FIGS. 10-11.

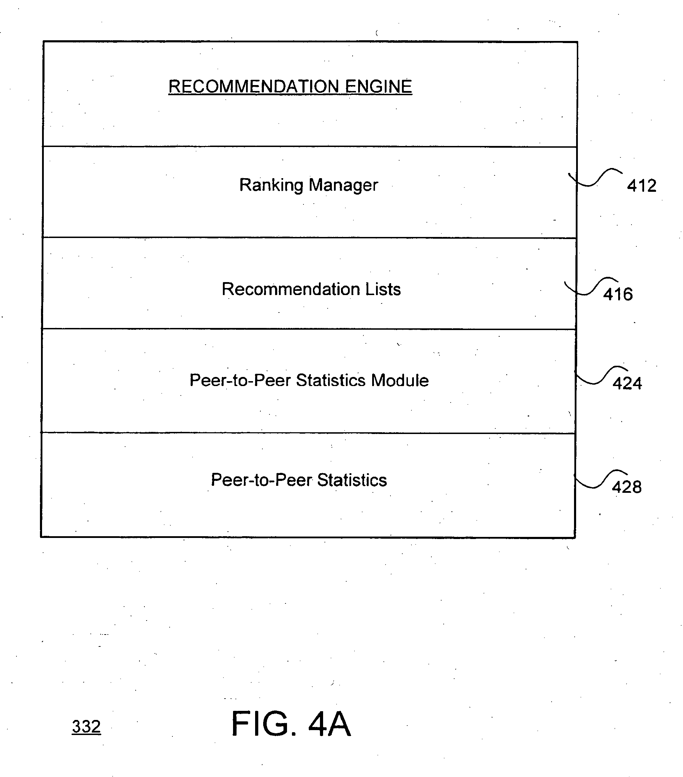

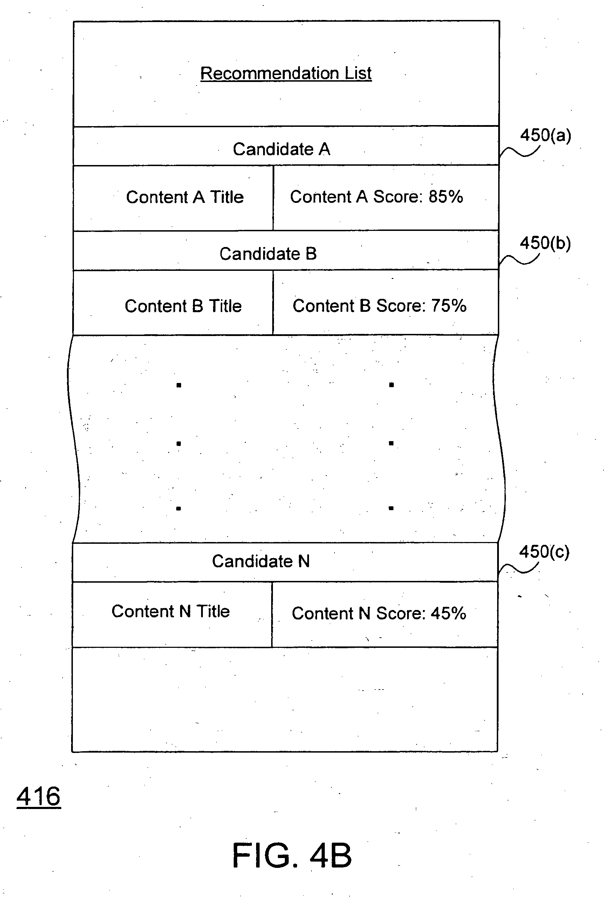

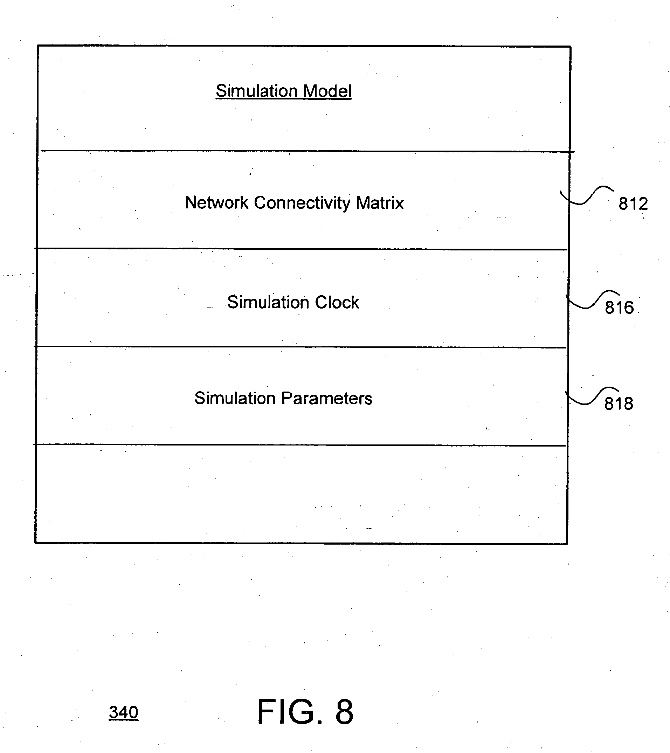

In the FIG. 3 embodiment, recommendation engine 332 may analyze various types of content recommendation criteria (such as user content-selection histories) to thereby automatically provide recommended content items to system users. One embodiment for recommendation engine 332 is further discussed below in conjunction with FIG. 4. In the FIG. 3 embodiment, communication manager 336 may perform appropriate communication functions with client devices 126 to bi-directionally transfer appropriate information. Additional details regarding the operation and implementation of tracking server 118 are further discussed below in conjunction with FIGS. 8-11.

Referring now to FIG. 4A, a diagram for one embodiment of the FIG. 3 recommendation engine 332 is shown, in accordance with an embodiment of the present invention. In the FIG. 4A embodiment, recommendation engine 332 may include, but is not limited to, a ranking manager 412, recommendation lists 416, a peer-to-peer statistics module 424, and peer-to-peer statistics 428. In alternate embodiments, recommendation engine 332 may include other elements and configurations in addition to, or instead of, certain of those elements and configurations discussed in conjunction with the FIG. 4A embodiment.

In the FIG. 4A embodiment, recommendation engine 332 may utilize ranking manager 412 for analyzing various relevant types of individual ranking criteria regarding a device user of a given client device 126 (FIG. 1) to thereby generate a corresponding one of the individual recommendation lists 416. For example, ranking manager 412 may generate a recommendation list 416 for a given client device 126 by analyzing client attributes from a corresponding client profile. One embodiment for implementing a recommendation list 416 is further discussed below in conjunction with FIG. 4B.

In the FIG. 4A embodiment, recommendation engine 332 may utilize a peer-to-peer statistics module 424 for monitoring and compiling peer-to-peer statistics 428 that reflect any appropriate information and characteristics of peer-to-peer network 134 (FIG. 1B). For example, peer-to-peer statistics 428 may include any desired type of statistical information regarding content transfer procedures for transferring content items directly between client devices 126 in peer-to-peer network 134. In certain embodiments, peer-to-peer statistics module 424 may periodically query client devices 126 to obtain updated peer-to-peer statistics 428.

Alternately, client devices 126 may automatically inform peer-to-peer statistics module 424 regarding any new content transfer procedures, and peer-to-peer statistics module 424 may then update peer-to-peer statistics 428. In the FIG. 4A embodiment, peer-to-peer statistics 428 may be collected for each client device 126, and may include, but are not limited to, peer-to-peer transfer frequency, transferred content types, transfer target devices, transfer source devices, transferred content titles, and any other relevant statistical transfer patterns or information.

Referring now to FIG. 4B, a diagram for one embodiment of a FIG. 4A recommendation list 416 is shown, in accordance with an embodiment of the present invention. In the FIG. 4B embodiment, recommendation list 416 includes, but is not limited to, a ranked series of candidates 450 that each represent a different content item available to client devices 126. In alternate embodiments, recommendation list 416 may include other components and information in addition to, or instead of, certain of those components and information discussed in conjunction with the FIG. 4B embodiment.

In the FIG. 4B embodiment, recommendation list 416 includes a candidate A 450(a) through a candidate N 450(c) that each has a corresponding content title and content score. For example, the FIG. 4B candidate A 450(a) includes a content A title and a content A score of 85%. In the FIG. 4B embodiment, candidate A 450(a) is therefore the optimal individual candidate based upon the highest content score. In alternate embodiments, particular content items may be identified by any other appropriate content item designation. For example, content items may be identified by a content identification number. In addition, in certain embodiments, ranking indicators for the transfer candidates 450 may be implemented in any other effective manner. For example, a numerical merit indicator other than a percentage may alternately be utilized.

In the FIG. 4B embodiment, a ranking manager 412 of recommendation engine 332 (FIG. 4A) calculates the content scores to generate the ranked recommendation list 416 by analyzing any appropriate types of information. For example, ranking manager 412 may generate a recommendation list 416 for a given client device 126 by analyzing pre-determined ranking criteria that may include device user attributes and client device characteristics from a corresponding client profile.

Furthermore, ranking manager 412 may analyze the predetermined ranking criteria by utilizing any effective techniques and procedures. For example, in certain embodiments, ranking manager 412 may perform a weighted averaging of the different ranking factors from the ranking criteria to determine a cost function that represents the likelihood of selecting a content item by a device user. Each of the various ranking factors may be associated with a different weighting value that represents the approximate significance of the corresponding ranking factor. The utilization of recommendation lists 416 is further discussed below in conjunction with FIGS. 10-11.

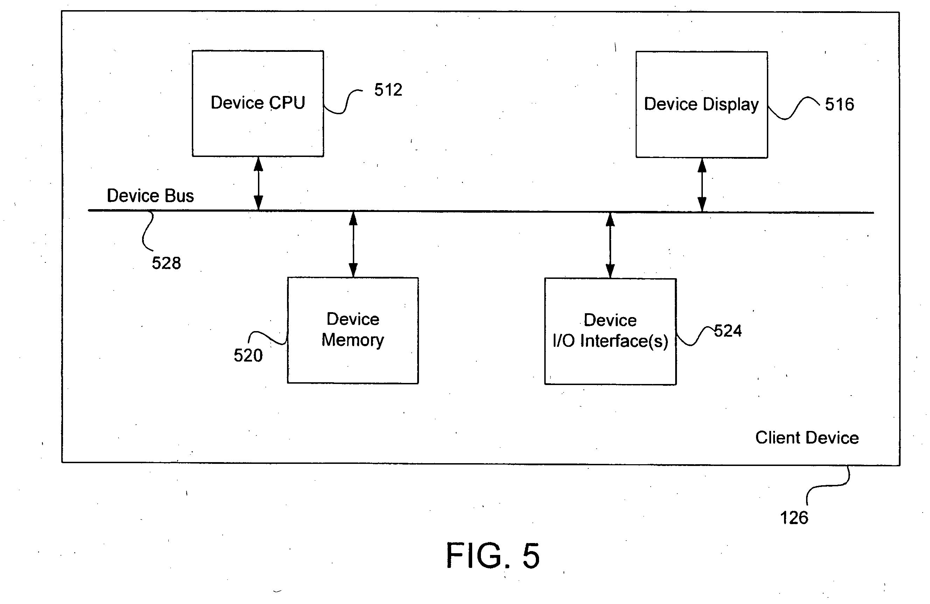

Referring now to FIG. 5, a block diagram for one embodiment of a FIG. 1A client device 126 is shown, in accordance with an embodiment of the present invention. In the FIG. 5 embodiment, client device 126 may include, but is not limited to, a device central processing unit (device CPU) 512, a device display 516, a device memory 520, and one or more device input/output interface(s) (device I/O interface(s)) 524. The foregoing components of client device 126 may be coupled to, and communicate through, a device bus 528.

In alternate embodiments, client device 126 may be implemented using components and configurations in addition to, or instead of, certain of those components and configurations discussed in conjunction with the FIG. 5 embodiment. Furthermore, in the FIG. 5 embodiment, client device 126 may be implemented as any type of appropriate electronic device. For example, in certain embodiments, client device 126 may be implemented as any type of stationary or portable electronic device, such as a personal computer, a television, a consumer-electronics device, a cellular telephone, a settop box, an audio-visual entertainment device, or a personal digital assistant (PDA).

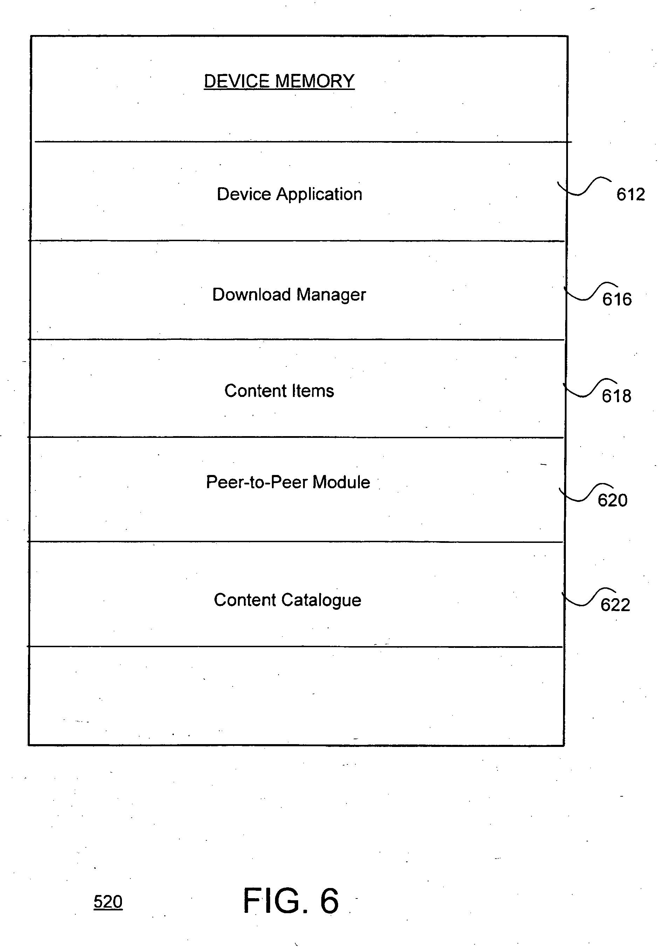

In the FIG. 5 embodiment, device CPU 512 may be implemented to include any appropriate and compatible microprocessor device that preferably executes software instructions to thereby control and manage the operation of client devices 126. The FIG. 5 device display 516 may include any effective type of display technology including a cathode-ray-tube monitor or a liquid-crystal display device with an appropriate screen for displaying various information to a device user. In the FIG. 5 embodiment, device memory 520 may be implemented to include any combination of desired storage devices, including, but not limited to, read-only memory (ROM), random-access memory (RAM), and various types of non-volatile memory, such as floppy disks, memory sticks, compact disks, or hard disks. The contents and functionality of device memory 520 are further discussed below in conjunction with FIG. 6.

In the FIG. 5 embodiment, device I/O interface(s) 524 may include one or more input and/or output interfaces to receive and/or transmit any required types of information by client device 126. Device I/O interface(s) 524 may include one or more means for allowing a device user to communicate with other entities in electronic network 110 (FIG. 1A). For example, the foregoing means may include a keyboard device, a wireless remote-control device, a speech-recognition module with corresponding microphone, a graphical user interface with touch-screen capability, a hand-held device controller unit, or a selection button array mounted externally on client device 126. The implementation and utilization of client device 126 are further discussed below in conjunction with FIGS. 8-9.

Referring now to FIG. 6, a block diagram for one embodiment of the FIG. 5 device memory 520 is shown, in accordance with an embodiment of the present invention. In the FIG. 6 embodiment, device memory 520 includes, but is not limited to, a device application 612, a download manager 616, content items 618, a peer-to-peer module 620, and a content catalogue 622. In alternate embodiments, device memory 520 may include various other components and functionalities in addition to, or instead of, certain of those components and functionalities discussed in conjunction with the FIG. 6 embodiment.

In the FIG. 6 embodiment, device application 612 may include program instructions that are preferably executed by a device CPU 512 (FIG. 5) to perform various functions and operations for a client device 126. The particular nature and functionality of device application 612 typically varies depending upon factors such as the specific type and particular functionality of the corresponding client device 126.

In the FIG. 6 embodiment, download manager 616 may perform communication procedures for exchanging electronic information with external entities by utilizing any appropriate techniques. For example, download manager 616 may coordinate content transfer procedures to automatically request, receive and locally store content items 618 from other client devices 126 in peer-to-peer network 134. In addition, download manager 616 may bi-directionally communicate with tracking server 118 to obtain current location information for specific required content segments 618.

In the FIG. 6 embodiment, content items 618 may include either content that was initially preloaded onto a client device 126 during manufacture, or content that was subsequently received from other client devices 126. In the FIG. 6 embodiment, peer-to-peer module 620 may be utilized by a particular client device 126 to directly communicate with any other client device 126 in peer-to-peer network 134 (FIG. 2). For example, peer-to-peer module 620 may perform a content transfer procedure to download content items from other client devices 126 in peer-to-peer network 134. In the FIG. 6 embodiment, content catalogue 622 may include an extensive listing of all content items 422 that are available on client devices 126.

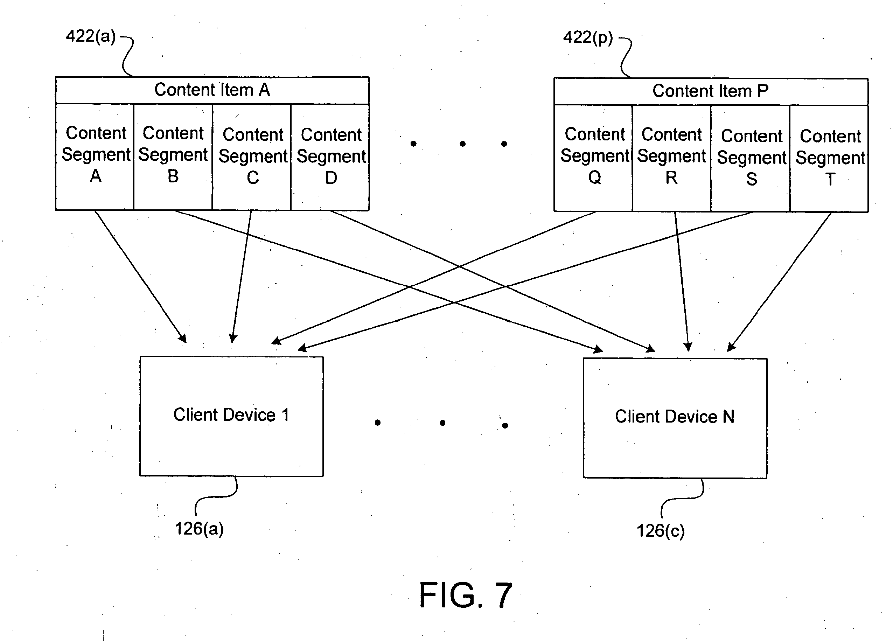

Referring now to FIG. 7, a diagram illustrating a segmented content preloading procedure is shown. The FIG. 7 example is presented for purposes of illustration, and in alternate embodiments, the present invention may support segmented content preloading procedures by with techniques and configurations in addition to, or instead of, certain of those techniques and configurations discussed in conjunction with the FIG. 7 embodiment.

In certain situations, manufacturers of various electronic devices may desire to preload content items 422 onto their electronic devices, and offer some of these content items without cost, so that the system users may be more likely to begin using their services. One limitation of pre-loading entire content items is the physical size of device hard disks, as well as the manufacturing time needed to image the hard disk in the factory. For example, if a manufacturer wishes to preload two high-definition movies onto an electronic device, then the required size of the hard disk to store the movies might be over 200 Gigabytes, and imaging the hard disks would be very time-consuming.

Another problem is that the manufacturer must very carefully choose which content items to pre-load. Because of the large amount of digital data involved, the limited number of content items would likely not satisfy all customers, but might be attractive only to a limited subset of system users. In addition, there are various significant security issues with pre-loaded content items, because customers may be able to extract the content items without any authorization. In certain environments, manufacturers may offer their content items by means of accessing the content items from a content provider or service. However, this option is very expensive because of the high download fees charged by content providers.

In accordance with the FIG. 7 embodiment, instead of preloading entire content items, the content items may be divided into any desired number of different content segments of any appropriate segment size(s). In the FIG. 7 embodiment, for purposes of illustration, the shown content items 422 are both divided into four content segments. Any desired number of different content items 422 may be utilized. In the FIG. 7 example, content item A 422(a) is divided into four content segments A through D, and content item P 422(p) is divided into four content segments Q through T. However, the number of different content segments and their corresponding segment sizes is not fixed. Also, all content items 422 need not have the same number or size of content segments. The number and size of content segments per content item 422 may be determined in any effective and optimal manner.

Segmented content preloading procedures may then be performed by selecting and storing a subset of content segments from the various content items 422 onto individual client devices 126. In accordance with an embodiment of the present invention, any desired number of client devices 126 may be utilized. All client devices 126 need not receive content segments. However, each content segment from every content item 422 is preferably preloaded onto at least one client device 126. In the FIG. 7 example, client device 1 (126(a)) receives content segments A and C from content item A 422(a) and content segments Q and S from content item P 422(p). Similarly, client device N 126(c) receives content segments B and D from content item A 422(a) and content segments R and T from content item P 422(p). System users may then browse a complete content catalog of available content items 422 to initiate peer-to-peer transfers for obtaining required content segments for the content items 422 of their choice.

In accordance with the foregoing segmented content preloading procedure, storage capacity (hard disk size) of the client devices 126 does not pose a serious limitation because only a relatively small content segment from every content item 422 is pre-loaded. High-definition content (with greater amounts of image data) may thus be more effectively supported. In addition, the preloaded content may now be personalized to individual user tastes because system users may flexibly select from an extensive content catalogue of contents items, instead of just a few content items that were preloaded in their entirety. With regard to content security issues, the preloaded content segments can not be used to assemble complete content items 422 because initially there are many content segments that are missing from any given client device 126.

In addition, a complete set of content segments from the content items 422 is preloaded in a distributed manner to the various client devices 126. There may therefore be no need for downloading content from content providers, and thus no expensive download fees. Furthermore, as new content items become available, corresponding new content segments may be preloaded onto new client devices 126 for subsequent dissemination to other client devices 126 through peer-to-peer network 134.

Referring now to FIG. 8, a block diagram of the FIG. 3 simulation model 340 is shown, in accordance with one embodiment of the present invention. In alternate embodiments, the present invention may utilize simulation models with components and functionalities in addition to, or instead of, certain of those components and functionalities discussed in conjunction with the FIG. 8 embodiment.

Embodiments of the present invention address the problem of time-efficient distribution of electronic content to client devices 126 (FIG. 1), and seek to provide enhanced techniques for maximizing a network revenue index that is generated using a peer-assisted content distribution network (peer-to-peer network 134). These goals may advantageously be achieved through the use of simulation model 340 as a stochastic (non-deterministic) framework for estimation and analysis of revenue and other relevant network characteristics. In certain embodiments, device users of client devices 126 may be charged fees for downloading and utilizing content items. Through the use of simulation model 340 to perform network simulation procedures, a content provider, a network implementer, or other similar entity may evaluate electronic network 110 by utilizing the network revenue index or other appropriate network characteristics. In certain embodiments, the foregoing revenue index may be defined as a total sum of all content usage or download fees paid by client devices 126 to the content provider or other managing entity over a given time period.

In accordance with an embodiment of the present invention, tracking server 118 (FIG. 2) or another appropriate entity may coordinate network simulation procedures before electronic network 110 has been actually implemented by utilizing appropriate probabilistic techniques to estimate various characteristics or parameters of simulation model 340. The network simulation procedures may thus be utilizing to predict and correct potential problems in electronic network 110 at the design stage before actually implemented a physical network. Alternately, tracking server 118 (FIG. 2) or other appropriate entity may coordinate network simulation procedures after electronic network 110 has been actually implemented by utilizing appropriate polling or reporting techniques to obtain various characteristics or parameters for simulation model 340 directly from client devices 126 in peer-to-peer network 134.

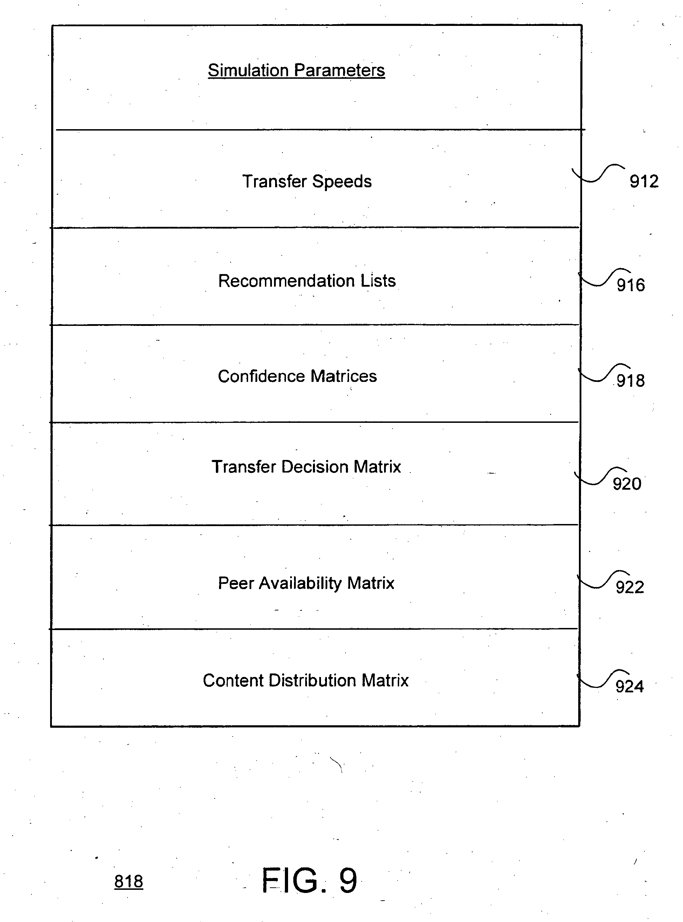

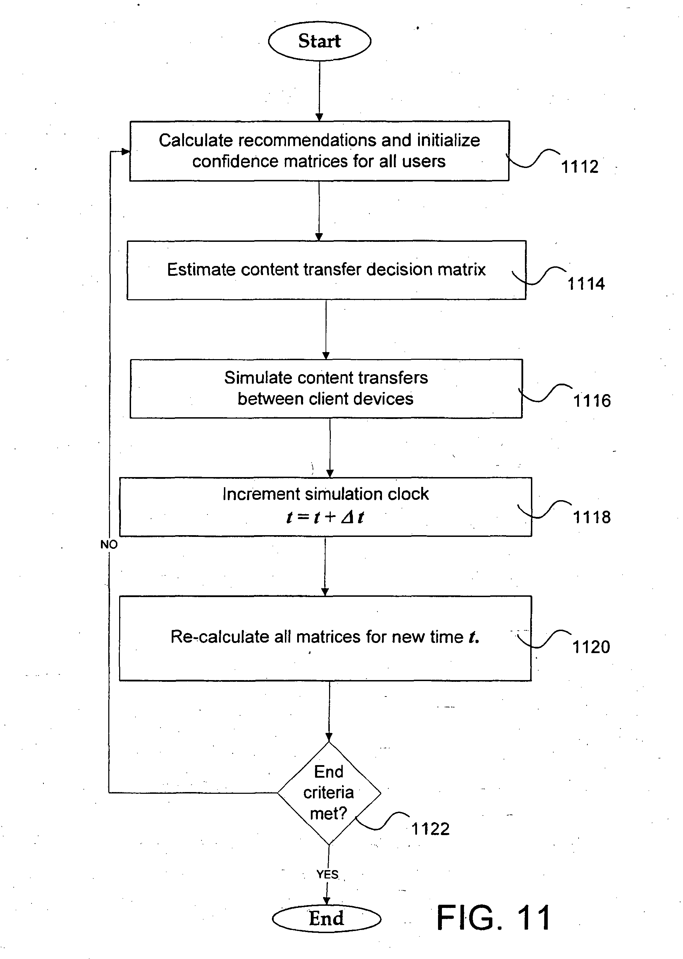

In the FIG. 8 embodiment, simulation model 340 includes a network connectivity matrix 812 that describes the topography of electronic network 110 (FIG. 1) in any effective manner. For example, network connectivity matrix may include a node for each client device 126, and respective transfer links between each pair of client devices 126 in peer-to-peer network 134. In the FIG. 8 embodiment, simulation model 340 may include a simulation clock 816 whose operation is further discussed below in conjunction with FIG. 11. In the FIG. 8 embodiment, simulation model 340 may also include a set of simulation parameters 818 that are compiled and utilized for performing appropriate network simulation procedures. The configuration and utilization of simulation parameters 818 is further discussed below in conjunction with FIGS. 9-11.

Referring now to FIG. 9, a block diagram of the FIG. 8 simulation parameters 818 is shown, in accordance with one embodiment of the present invention. In alternate embodiments, the present invention may utilizing simulation parameters with components and functionalities in addition to, or instead of, certain of those components and functionalities discussed in conjunction with the FIG. 9 embodiment.

In the FIG. 9 embodiment, simulation parameters 818 may be obtained or derived by utilizing any appropriate and effective techniques. For example, in certain embodiments, a simulation manager 328 (FIG. 3) of tracking server 118 may obtain certain simulation parameters 818 (such as download/upload speeds or peer availability times) from known physical characteristics of client devices 126. Alternately, simulation manager 328 or other entity may monitor and collect actual performance statistics (such as download/upload speeds or peer availability times) directly from the various client devices 126 in peer-to-peer network 134. In addition, randomness factors may be introduced into certain of the simulation parameters 818 by randomly selecting (for example, from a Gaussian distribution) when and which client devices 126 fulfill the various simulation parameters 818.

In the FIG. 9 embodiment, simulation parameters 818 may include transfer speeds 912 for data transfer links between all devices in electronic network 110. These transfer speeds may include separate upload and download speeds for each transfer link. In addition, in certain embodiments, transfer speeds 912 may be derived with a time-variant function that calculates or predicts individual differing transfer speeds that vary over time. In the FIG. 9 embodiment, simulation parameters 818 may include recommendation lists 916 for content items that respective devices users are likely to purchase, as discussed above in FIGS. 4A-B.

In the FIG. 9 embodiment, simulation parameters 818 may include confidence matrices 918 that include confidence data regarding the probability that respective client devices 126 would purchase various content items a specific times. In the FIG. 9 embodiment, simulation parameters 818 may include a transfer decision matrix 920 that utilizes information from recommendation lists 916 and confidence matrices 918 to express decisions by corresponding device users of client devices 126 to request and transfer desired content items from other client devices 126.

In the FIG. 9 embodiment, simulation parameters 818 may include a peer availability matrix 922 that includes information about the amount of time respective client devices 126 may be powered-up and connected to peer-to-peer network 134 for transferring content items. In certain embodiments, peer availability matrix 922 may be derived with a time-variant function that calculates or predicts individual differing peer availability parameters that vary over time. In the FIG. 9 embodiment, the foregoing peer availability information may be either predicted based upon market research or other factors, or may be empirically measured from actual client devices 126 in peer-to-peer network 134. In the FIG. 9 embodiment, simulation parameters 818 may include a content distribution matrix 924 that is based upon content locations 320 (FIG. 3) that are monitored and compiled by tracker module 324 of tracking server 118. One embodiment for utilizing simulation parameters 818 to perform a network simulation procedure is discussed below in conjunction with FIGS. 10-11.

Referring now to FIG. 10, a flowchart of method steps for optimizing an electronic network 110 is shown, in accordance with one embodiment of the present invention. The flowchart of FIG. 10 is presented for purposes of illustration, and in alternate embodiments, the present invention may utilize steps and sequences other than those steps and sequences discussed in conjunction with the FIG. 10 embodiment.

In the FIG. 10 embodiment, in step 1012, a simulation manager 328 of tracking server 118 (or other appropriate entity) initializes a network connectivity matrix 812 of a simulation model 340 to define the topology of an electronic network 110 (FIG. 1). In various embodiments, network connectivity matrix 812 may include any desired information, including, but not limited to, upload and/or download transfer speeds for client devices 126 in the electronic network 110. In step 1014, simulation manager 328 initializes a peer availability matrix 922 that specifies availabilities (powered and connected states) of the various client devices 126 in a peer-to-peer network 134 of electronic network 110. In step 1016, simulation manager 328 initializes a content distribution matrix 924 that defines where various content items current reside on the client devices 126 in peer-to-peer network 134.

In step 1018, simulation manager 328 sets a simulation clock 816 to the current date and time. In alternate embodiments, simulation clock 816 may be set to any desired date and/or time. In step 1020, simulation manager 328 utilizes a simulation model 340 to perform a network simulation procedure that simulates operational characteristics of the electronic network 110. Specific additional details of the network simulation procedure are further discussed below in conjunction with FIG. 11. In step 1022, simulation manager 328 or another appropriate entity (such as a system designer) analyzes simulation results from the network simulation procedure.

In certain embodiments, simulation manager 328 or other appropriate entity may also estimate and evaluate a revenue index that is based upon the performance of electronic network 110 during the network simulation procedure. The foregoing simulation results may include any appropriate types of information or problems, including, but not limited to, transfer bottlenecks (for example, patterns of slow transfer speeds between various client devices 126 and/or patterns of low peer availability statistics for particular client devices 126) or patterns of low client revenues.

In step 1024, simulation manager 328 or other appropriate entity (such as a system designer) may determine whether any specific network improvements to electronic network 110 are suggested or required based upon the network simulation procedure. The network improvements may be suggested in appropriate manner. For example, network improvements may be triggered by observing certain pre-defined problem criteria in the simulation analysis data generated from the network simulation procedure. In step 1024, if network improvements are suggested, then in step 1026, the network improvements may be implemented in any effective manner. For example, the network improvements may be implemented automatically by simulation manager 328 or other appropriate entity, or the network improvements may be implemented manually by a system designer or similar entity. However, in step 1024, if no improvements are suggested, then the FIG. 10 procedure may terminate.

Referring now to FIG. 11, a flowchart of method steps for performing a network simulation procedure is shown, in accordance with one embodiment of the present invention. The flowchart of FIG. 11 is presented for purposes of illustration, and in alternate embodiments, the present invention may utilize steps and sequences other than those steps and sequences discussed in conjunction with the FIG. 11 embodiment.

In the FIG. 11 embodiment, in step 1112, simulation manager 328 (or other appropriate entity) obtains recommendation lists 916 and confidence matrices 918 for all system users of client devices 126. In step 1114, simulation manager 328 estimates a content transfer decision matrix 920. Then, in step 1116, simulation manager 328 utilizes the accumulated simulation model 340 to simulate content transfers and other performance attributes for client devices 126 in electronic network 110 (ensuring that any bandwidth limitations of peer-to-peer network 134 are satisfied).

In step 1118, simulation manager 328 periodically increments simulation clock 816 according to a formula : *t* = *t* + Δ*t* (where "*t*' is a current time of simulation clock and "Δ*t*" is a selectable time interval) to generate an updated value for simulation clock 816. In step 1120, simulation manager 328 (or other appropriate entity) recalculates all matrices and any other appropriate simulation parameters 818 based upon the updated value of simulation clock 816. In step 1122, simulation manager 328 determines whether certain pre-defined end criteria have been met. In step 1122, if the pre-defined end criteria have not yet been met, then the FIG. 11 process returns to step 1112, and repeats the simulation procedure with the new simulation parameters 818. However, in step 1122, if the pre-defined end criteria have been met, then the FIG. 11 procedure may terminate. For at least the foregoing reasons, embodiment of the present invention therefore provides an improved system and method for effectively performing a network simulation procedure.

The invention has been explained above with reference to certain embodiments. Other embodiments will be apparent to those skilled in the art in light of this disclosure. For example, the present invention may readily be implemented using certain configurations and techniques other than those described in the specific embodiments above. Additionally, the present invention may effectively be used in conjunction with systems other than those described above. Therefore, these and other variations upon the discussed embodiments are intended to be covered by the present invention, which is limited only by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for performing a network simulation procedure for an electronic network (110), comprising:
a simulation model (340) that is configured to represent said electronic network, said electronic network including client devices (126) that are each configured to locally store content segments of content items (422) in a distributed manner and to perform a peer-to-peer content transfer procedure to download content segments from any of the other client devices, certain of said client devices periodically accessing content segments from other ones of said client devices by initiating peer-to-peer transfers for obtaining required content segments for content items chosen by users of the client devices;
a tracking module (324) of a tracking server (118) that monitors current storage locations of said content segments on said client devices;
a recommendation engine (332) of said tracking server that generates recommendation lists (416) by analyzing pre-determined ranking criteria including client device user attributes and client device characteristics, said recommendation lists each comprising a ranked list of content items (450) that respective client device users are likely to download; and
a simulation manager (328) of said tracking server (118) that compiles simulation parameters corresponding to said electronic network, said simulation parameters including said storage locations of said content segments, said recommendation lists, and confidence matrices (918) including confidence data regarding probability that respective client devices will download various content items at specific times, said simulation manager utilizing said simulation model and said simulation parameters to perform said network simulation procedure,
wherein said simulation procedure includes calculating said recommendation lists and said confidence matrices for all client device users, using said recommendation lists and said confidence matrices to estimate a content transfer decision matrix (920) expressing decisions by client device users to request desired content items, and using said content transfer decision matrix in said simulation model to simulate and optimize content segment transfers between said client devices.

2. The system of claim 1 wherein said client devices are configured in a peer-to-peer network (134) that supports direct bi-directional communications between any of said client devices.

3. The system of claim 1 wherein said simulation parameters include transfer speeds between said client devices, and peer availability parameters for said client devices.

4. The system of claim 1 wherein said simulation manager (328) performs said network simulation procedure before said electronic network is physically implemented to predict and remedy network performance problems in advance.

5. The system of claim 1 wherein said simulation manager (328) performs said network simulation procedure after said electronic network is physically implemented to identify and correct existing network performance problems.

6. The system of claim 1 wherein said simulation model (340) includes a network connectivity matrix (812) that represents said client devices and transfer links between said client devices, said simulation model also including a simulation clock (816) for periodically re-synchronizing said simulation parameters according to respective time-variant functions.

7. The system of claim 1 wherein said simulation manager (328) utilizes said simulation parameters in a stochastic non-deterministic manner by introducing randomness factors during said network simulation procedure.

8. The system of claim 1 wherein said simulation manager (328) initializes a network connectivity matrix (812), a peer availability matrix (922), and a content distribution matrix (924).

9. The system of claim 8 wherein said simulation manager (328) sets a simulation clock to a current date and time.

10. The system of claim 9 wherein said simulation manager (328) simulates content transfers between said client devices based upon said simulation parameters and a current clock value of said simulation clock.

11. The system of claim 10 wherein said simulation manager (328) increments said simulation clock to provide an updated clock value.

12. The system of claim 11 wherein said simulation manager (328) recalculates said simulation parameters based upon said updated clock value of said simulation clock, said simulation manager iteratively incrementing said simulation clock and repeating said network simulation procedure until predefined end criteria are met.

13. The system of claim 1 wherein said simulation manager (328) analyzes simulation results from said network simulation procedure to identify network performance problems.

14. The system of claim 13 wherein said simulation manager (328) estimates a network revenue index for said electronic network based upon said simulation results, said network revenue index representing network efficiency characteristics of said electronic network.

15. The system of claim 13 wherein said simulation manager (328) provides and implements specific network improvements to correct said network performance problems.

16. The system of claim 15 wherein said network performance problems include patterns of insufficient transfer speeds and patterns of insufficient peer availability for client devices in said electronic network.

17. A method for performing a network simulation procedure for an electronic network (110), comprising the steps of:
creating a simulation model (340) that is configured to represent said electronic network, said electronic network including client devices that are each configured to locally store content segments of content items (422) in a distributed manner and to a perform peer-to-peer content transfer procedure to download content segments from any of the other client devices, certain of said client devices periodically accessing content segments from other ones of said client devices by initiating peer-to-peer transfers for obtaining required content segments for content items chosen by users of the client devices;
monitoring, using a tracking module of a tracking server (118), current storage locations of said content segments on said client devices;
generating, using a recommendation engine (332) of said tracking server, recommendation lists, by analyzing pre-determined ranking criteria including client device user attributes and client device characteristics, said recommendation lists each comprising a ranked list of content items (450) that respective client device users are likely to download; and
utilizing a simulation manager of said tracking server to compile simulation parameters corresponding to said electronic network, said simulation parameters including said storage locations of said content segments, said recommendation lists, and confidence matrices (918) including confidence data regarding probability that respective client devices will download various content items at specific times, said simulation manager using said simulation model and said simulation parameters to perform said network simulation procedure,
wherein said simulation procedure includes calculating said recommendation lists and said confidence matrices for all client device users, using said recommendation lists and said confidence matrices to estimate a content transfer decision matrix (920) expressing decisions by client device users to request desired content items, and using said content transfer decision matrix in said simulation model to simulate and optimize content segment transfers between said client devices.

## Patentansprüche

1. System zum Ausführen einer Netzsimulationsprozedur für ein elektronisches Netz (110), das Folgendes umfasst:
ein Simulationsmodell (340), das konfiguriert ist, das elektronische Netz zu repräsentieren, wobei das elektronische Netz Client-Vorrichtungen (126) enthält, wovon jede konfiguriert ist, lokal Inhaltssegmente von Inhaltseinträgen (422) auf eine verteilte Weise zu speichern und eine Peer-to-Peer-Inhaltsübertragungsprozedur auszuführen, um Inhaltssegmente von irgendeiner der anderen Client-Vorrichtungen herunterzuladen, wobei bestimmte der Client-Vorrichtungen durch Initiieren von Peer-to-Peer-Übertragungen periodisch auf Inhaltssegmente von anderen der Client-Vorrichtungen zugreifen, um angeforderte Inhaltssegmente für Inhaltseinträge, die von Anwendern der Client-Vorrichtungen gewählt werden, zu erhalten;
ein Verfolgungsmodul (324) eines Verfolgungs-Servers (118), das aktuelle Speicherorte der Inhaltssegmente auf den Client-Vorrichtungen überwacht;
eine Empfehlungsmaschine (332) des Verfolgungs-Servers, die Empfehlungslisten (416) durch Analysieren vorgegebener Rangfolgekriterien, die Anwenderattribute von Client-Vorrichtungen und Eigenschaften von Client-Vorrichtungen enthalten, erzeugt, wobei jede der Empfehlungslisten eine Rangliste von Inhaltseinträgen (450) umfasst, die die jeweiligen Anwender der Client-Vorrichtungen wahrscheinlich herunterladen; und
einen Simulationsmanager (328) des Verfolgungs-Servers (118), der Simulationsparameter zusammenstellt, die dem elektronischen Netz entsprechen, wobei die Simulationsparameter die Speicherorte der Inhaltssegmente, die Empfehlungslisten und Vertrauensmatrizen (918), die Vertrauensdaten enthalten, die eine Wahrscheinlichkeit betreffen, dass jeweilige Client-Vorrichtungen verschiedene Inhaltseinträge zu spezifizierten Zeiten herunterladen werden, enthalten, wobei der Simulationsmanager das Simulationsmodell und die Simulationsparameter verwendet, um die Netzsimulationsprozedur auszuführen,
wobei die Simulationsprozedur das Berechnen der Empfehlungslisten und der Vertrauensmatrizen für alle Anwender von Client-Vorrichtungen, das Verwenden der Empfehlungslisten und der Vertrauensmatrizen, um eine Inhaltsübertragungsentscheidungsmatrix (920) abzuschätzen, die Entscheidungen von Anwendern von Client-Vorrichtungen ausdrückt, um gewünschte Inhaltseinträge anzufordern, und das Verwenden der Inhaltsübertragungsentscheidungsmatrix in dem Simulationsmodell, um Inhaltssegmentübertragungen zwischen den Client-Vorrichtungen zu simulieren und zu optimieren, umfasst.

2. System nach Anspruch 1, wobei die Client-Vorrichtungen in einem Peer-to-Peer-Netz (134), das direkte bidirektionale Kommunikation zwischen allen Client-Vorrichtungen unterstützt, konfiguriert sind.

3. System nach Anspruch 1, wobei die Simulationsparameter Übertragungsgeschwindigkeiten zwischen den Client-Vorrichtungen und Peer-Verfügbarkeitsparameter für die Client-Vorrichtungen umfassen.

4. System nach Anspruch 1, wobei der Simulationsmanager (328) die Netzsimulationsprozedur ausführt, bevor das elektronische Netz physikalisch implementiert ist, um im Voraus Netzleistungsprobleme vorherzusagen und zu lösen.

5. System nach Anspruch 1, wobei der Simulationsmanager (328) die Netzsimulationsprozedur ausführt, nachdem das elektronische Netz physikalisch implementiert ist, um bestehende Netzleistungsprobleme zu identifizieren und zu korrigieren.

6. System nach Anspruch 1, wobei das Simulationsmodell (340) eine Netzkonnektivitätsmatrix (812) enthält, die die Client-Vorrichtungen und Übertragungsverbindungen zwischen den Client-Vorrichtungen repräsentiert, wobei das Simulationsmodell ebenfalls eine Simulationsuhr (816) zum periodischen erneuten Synchronisieren der Simulationsparameter gemäß entsprechenden zeitlich veränderlichen Funktionen enthält.

7. System nach Anspruch 1, wobei der Simulationsmanager (328) die Simulationsparameter auf eine stochastische nicht deterministische Weise durch Einführen von Zufallsfaktoren während der Netzsimulationsprozedur verwendet.

8. System nach Anspruch 1, wobei der Simulationsmanager (328) eine Netzkonnektivitätsmatrix (812), eine Peer-Verfügbarkeitsmatrix (922) und eine Inhaltsverteilungsmatrix (924) initialisiert.

9. System nach Anspruch 8, wobei der Simulationsmanager (328) eine Simulationsuhr auf ein aktuelles Datum und eine aktuelle Zeit einstellt.

10. System nach Anspruch 9, wobei der Simulationsmanager (328) Inhaltsübertragungen zwischen den Client-Vorrichtungen basierend auf den Simulationsparametern und einem aktuellen Zeitwert der Simulationsuhr simuliert.

11. System nach Anspruch 10, wobei der Simulationsmanager (328) die Simulationsuhr inkrementiert, um einen aktualisierten Zeitwert bereitzustellen.

12. System nach Anspruch 11, wobei der Simulationsmanager (328) die Simulationsparameter basierend auf dem aktualisierten Zeitwert der Simulationsuhr erneut berechnet, wobei der Simulationsmanager iterativ die Simulationsuhr inkrementiert und die Netzsimulationsprozedur wiederholt, bis vorgegebene Endkriterien zutreffen.

13. System nach Anspruch 1, wobei der Simulationsmanager (328) Simulationsergebnisse aus der Netzsimulationsprozedur analysiert, um Netzleistungsprobleme zu identifizieren.

14. System nach Anspruch 13, wobei der Simulationsmanager (328) einen Netzertragsindex für das elektronische Netz basierend auf Simulationsergebnissen schätzt, wobei der Netzertragsindex Netzeffizienzeigenschaften des elektronischen Netzes repräsentiert.

15. System nach Anspruch 13, wobei der Simulationsmanager (328) spezifische Netzverbesserungen bereitstellt und implementiert, um die Netzleistungsprobleme zu korrigieren.

16. System nach Anspruch 15, wobei die Netzleistungsprobleme Muster von unzureichenden Übertragungsgeschwindigkeiten und Muster von unzureichender Peer-Verfügbarkeit für Client-Vorrichtungen in dem elektronischen Netz umfassen.

17. Verfahren zum Ausführen einer Netzsimulationsprozedur für ein elektronisches Netz (110), das folgende Schritte umfasst:
Erzeugen eines Simulationsmodells (340), das konfiguriert ist, das elektronische Netz zu repräsentieren, wobei das elektronische Netz Client-Vorrichtungen enthält, wovon jede konfiguriert ist, lokal Inhaltssegmente von Inhaltseinträgen (422) auf eine verteilte Weise zu speichern und eine Peer-to-Peer-Inhaltsübertragungsprozedur auszuführen, um Inhaltssegmente von irgendeiner der anderen Client-Vorrichtungen herunterzuladen, wobei bestimmte der Client-Vorrichtungen durch Initiieren von Peer-to-Peer-Übertragungen periodisch auf Inhaltssegmente von anderen der Client-Vorrichtungen zugreifen, um angeforderte Inhaltssegmente für Inhaltseinträge, die von Anwendern der Client-Vorrichtungen gewählt werden, zu erhalten;
Überwachen von aktuellen Speicherorten der Inhaltssegmente auf den Client-Vorrichtungen unter Verwendung eines Verfolgungsmoduls eines Verfolgungs-Servers (118);
Erzeugen unter Verwendung einer Empfehlungsmaschine (332) des Verfolgungs-Servers von Empfehlungslisten durch Analysieren vorgegebener Rangfolgekriterien, die Anwenderattribute von Client-Vorrichtungen und Eigenschaften von Client-Vorrichtungen enthalten, wobei jede der Empfehlungslisten eine Rangliste von Inhaltseinträgen (450) umfasst, die die jeweiligen Anwender der Client-Vorrichtungen wahrscheinlich herunterladen; und
Verwenden eines Simulationsmanagers des Verfolgungs-Servers, um Simulationsparameter zusammenzustellen, die dem elektronischen Netz entsprechen, wobei die Simulationsparameter die Speicherorte der Inhaltssegmente, die Empfehlungslisten, und Vertrauensmatrizen (918), die Vertrauensdaten enthalten, die eine Wahrscheinlichkeit betreffen, dass jeweilige Client-Vorrichtungen verschiedene Inhaltseinträge zu spezifizierten Zeiten herunterladen werden, enthalten, wobei der Simulationsmanager das Simulationsmodell und die Simulationsparameter verwendet, um die Netzsimulationsprozedur auszuführen,
wobei die Simulationsprozedur das Berechnen der Empfehlungslisten und der Vertrauensmatrizen für alle Anwender von Client-Vorrichtungen unter Verwendung der Empfehlungslisten und der Vertrauensmatrizen, um eine Inhaltsübertragungsentscheidungsmatrix (920) abzuschätzen, die Entscheidungen von Anwendern von Client-Vorrichtungen ausdrückt, gewünschte Inhaltseinträge anzufordern, und das Verwenden der Inhaltsübertragungsentscheidungsmatrix in dem Simulationsmodell, um Inhaltssegmentübertragungen zwischen den Client-Vorrichtungen zu simulieren und zu optimieren, umfasst.

## Revendications

1. Système pour réaliser une procédure de simulation de réseau pour un réseau électronique (110), le système comprenant :
un modèle de simulation (340) configuré pour représenter ledit réseau électronique, ledit réseau électronique comportant des dispositifs clients (126) configurés chacun pour mémoriser localement des segments de contenu d'éléments de contenu (422) d'une manière répartie et pour réaliser une procédure de transfert de contenu pair à pair pour télécharger des segments de contenu depuis des dispositifs clients quelconques parmi les autres dispositifs clients, certains desdits dispositifs clients accédant périodiquement à des segments de contenu depuis d'autres desdits dispositifs clients en lançant des transferts pair à pair en vue d'obtenir des segments de contenu requis pour des éléments de contenu choisis par des utilisateurs des dispositifs clients ;
un module de suivi à la trace (324) d'un serveur de suivi à la trace (118) qui surveille des emplacements de mémoire actuels desdits segments de contenu sur lesdits dispositifs clients ;
un moteur de recommandations (332) dudit serveur de suivi à la trace qui génère des listes de recommandations (416) en analysant des critères de classement préétablis comportant des attributs d'utilisateurs de dispositifs clients et des caractéristiques de dispositifs clients, lesdites listes de recommandations comprenant chacune une liste classée d'éléments de contenu (450) qui ont des chances d'être téléchargés par des utilisateurs de dispositifs clients respectifs ; et
un gestionnaire de simulation (328) dudit serveur de suivi à la trace (118) qui compile des paramètres de simulation correspondant audit réseau électronique, lesdits paramètres de simulation comportant lesdits emplacements de mémoire desdits segments de contenu, lesdites listes de recommandations et des matrices de confiance (918) comportant des données de confiance concernant la probabilité que des dispositifs clients respectifs téléchargeront divers éléments de contenu à des moments particuliers, ledit gestionnaire de simulation utilisant ledit modèle de simulation et lesdits paramètres de simulation pour réaliser ladite procédure de simulation de réseau,
laquelle procédure de simulation consiste à calculer lesdites listes de recommandations et lesdites matrices de confiance pour la totalité des utilisateurs de dispositifs clients, à utiliser lesdites listes de recommandations et lesdites matrices de confiance pour estimer une matrice de décisions de transfert de contenu (920) exprimant des décisions par des utilisateurs de dispositifs clients de solliciter des éléments de contenu souhaités, et à utiliser ladite matrice de décisions de transfert de contenu dans ledit modèle de simulation pour simuler et optimiser des transferts de segments de contenu entre lesdits dispositifs clients.

2. Système selon la revendication 1, dans lequel lesdits dispositifs clients sont configurés dans un réseau de pairs (134) qui prend en charge les communications bidirectionnelles directes entre des dispositifs clients quelconques parmi lesdits dispositifs clients.

3. Système selon la revendication 1, dans lequel lesdits paramètres de simulation comportent des vitesses de transfert entre lesdits dispositifs clients, et des paramètres de disponibilité de pairs pour lesdits dispositifs clients.

4. Système selon la revendication 1, dans lequel ledit gestionnaire de simulation (328) réalise ladite procédure de simulation de réseau préalablement à l'implémentation physique dudit réseau électronique dans le but d'anticiper des problèmes de performances de réseau et d'y remédier à l'avance.

5. Système selon la revendication 1, dans lequel ledit gestionnaire de simulation (328) réalise ladite procédure de simulation de réseau suite à l'implémentation physique dudit réseau électronique dans le but d'identifier des problèmes de performances de réseau existants et de les corriger.

6. Système selon la revendication 1, dans lequel ledit modèle de simulation (340) comporte une matrice de connectivité de réseau (812) qui représente lesdits dispositifs clients et des liaisons de transfert entre lesdits dispositifs clients, ledit modèle de simulation comportant également une horloge de simulation (816) servant à resynchroniser périodiquement lesdits paramètres de simulation conformément à des fonctions respectives variant dans le temps.

7. Système selon la revendication 1, dans lequel ledit gestionnaire de simulation (328) utilise lesdits paramètres de simulation d'une manière stochastique non déterministe en introduisant des facteurs à caractère aléatoire au cours de ladite procédure de simulation de réseau.

8. Système selon la revendication 1, dans lequel ledit gestionnaire de simulation (328) initialise une matrice de connectivité de réseau (812), une matrice de disponibilité de pairs (922) et une matrice de distribution de contenu (924).

9. Système selon la revendication 8, dans lequel ledit gestionnaire de simulation (328) règle une horloge de simulation sur une date et une heure actuelles.

10. Système selon la revendication 9, dans lequel ledit gestionnaire de simulation (328) simule des transferts de contenu entre lesdits dispositifs clients sur la base desdits paramètres de simulation et d'une valeur d'horloge actuelle de ladite horloge de simulation.

11. Système selon la revendication 10, dans lequel ledit gestionnaire de simulation (328) incrémente ladite horloge de simulation pour fournir une valeur d'horloge actualisée.

12. Système selon la revendication 11, dans lequel ledit gestionnaire de simulation (328) recalcule lesdits paramètres de simulation sur la base de ladite valeur d'horloge actualisée de ladite horloge de simulation, ledit gestionnaire de simulation incrémentant de façon itérative ladite horloge de simulation et répétant ladite procédure de simulation de réseau jusqu'à ce que des critères de fin prédéfinis soient remplis.

13. Système selon la revendication 1, dans lequel ledit gestionnaire de simulation (328) analyse des résultats de simulation issus de ladite procédure de simulation de réseau dans le but d'identifier des problèmes de performances de réseau.

14. Système selon la revendication 13, dans lequel ledit gestionnaire de simulation (328) estime un indice de revenus de réseau pour ledit réseau électronique sur la base desdits résultats de simulation, ledit indice de revenus de réseau représentant des caractéristiques d'efficacité de réseau dudit réseau électronique.

15. Système selon la revendication 13, dans lequel ledit gestionnaire de réseau (328) fournit et implémente des améliorations de réseau particulières dans le but de corriger lesdits problèmes de performances de réseau.

16. Système selon la revendication 15, dans lequel lesdits problèmes de performances de réseau comportent des situations de vitesses de transfert insuffisantes et des situations de disponibilité de pairs insuffisante pour des dispositifs clients dans ledit réseau électronique.

17. Procédé pour réaliser une procédure de simulation de réseau pour un réseau électronique (110), le procédé comprenant les étapes consistant à :
créer un modèle de simulation (340) configuré pour représenter ledit réseau électronique, ledit réseau électronique comportant des dispositifs clients configurés chacun pour mémoriser localement des segments de contenu d'éléments de contenu (422) d'une manière répartie et pour réaliser une procédure de transfert de contenu pair à pair pour télécharger des segments de contenu depuis des dispositifs clients quelconques parmi les autres dispositifs clients, certains desdits dispositifs clients accédant périodiquement à des segments de contenu depuis d'autres desdits dispositifs clients en lançant des transferts pair à pair en vue d'obtenir des segments de contenu requis pour des éléments de contenu choisis par des utilisateurs des dispositifs clients ;
surveiller, au moyen d'un module de suivi à la trace d'un serveur de suivi à la trace (118), des emplacements de mémoire actuels desdits segments de contenu sur lesdits dispositifs clients ;
générer, au moyen d'un moteur de recommandations (332) dudit serveur de suivi à la trace, des listes de recommandations (416) en analysant des critères de classement préétablis comportant des attributs d'utilisateurs de dispositifs clients et des caractéristiques de dispositifs clients, lesdites listes de recommandations comprenant chacune une liste classée d'éléments de contenu (450) qui ont des chances d'être téléchargés par des utilisateurs de dispositifs clients respectifs ; et
utiliser un gestionnaire de simulation dudit serveur de suivi à la trace pour compiler des paramètres de simulation correspondant audit réseau électronique, lesdits paramètres de simulation comportant lesdits emplacements de mémoire desdits segments de contenu, lesdites listes de recommandations et des matrices de confiance (918) comportant des données de confiance concernant la probabilité que des dispositifs clients respectifs téléchargeront divers éléments de contenu à des moments particuliers, ledit gestionnaire de simulation utilisant ledit modèle de simulation et lesdits paramètres de simulation pour réaliser ladite procédure de simulation de réseau,
laquelle procédure de simulation consiste à calculer lesdites listes de recommandations et lesdites matrices de confiance pour la totalité des utilisateurs de dispositifs clients, à utiliser lesdites listes de recommandations et lesdites matrices de confiance pour estimer une matrice de décisions de transfert de contenu (920) exprimant des décisions par des utilisateurs de dispositifs clients de solliciter des éléments de contenu souhaités, et à utiliser ladite matrice de décisions de transfert de contenu dans ledit modèle de simulation pour simuler et optimiser des transferts de segments de contenu entre lesdits dispositifs clients.
